# EUROPÄISCHE PATENTSCHRIFT

(11) **EP 0 428 862 B1**
(45) Veröffentlichungstag und Bekanntmachung des Hinweises auf die Patenterteilung: **09.03.1994**
(21) Anmeldenummer: 90119598.2
(22) Anmeldetag: 12.10.1990
(51) Int. Cl.: B01D 46/24

(54) **Vorrichtung zum Filtern von heissen, staubbeladenen Gasen**
Device for the filtration of hot, dustladen gases
Dispositif pour la filtration des gaz chauds chargés de poussières

(30) Priorität: 17.11.1989 DE 3938264
(43) Veröffentlichungstag der Anmeldung: 29.05.1991
(73) Patentinhaber: DEUTSCHE BABCOCK ENERGIE- UND UMWELTTECHNIK AKTIENGESELLSCHAFT, 46049 Oberhausen (DE)
(72) Erfinder: Kilicaslan, Muharrem, W-4223 Voerde (DE); Meier, Hans Joachim, W-4234 Alpen 1 (DE); Rehwinkel, Heiko, Dr., W-4250 Bottrop (DE); Raue, Wolfgang, W-4100 Duisburg 29 (DE); Ruther, Gerd, W-4300 Essen (DE)
(74) Vertreter: Müller, Jürgen, Dipl.-Ing.

(56) Entgegenhaltungen:
- EP-A- 0 092 839
- EP-A- 0 244 061
- EP-A- 0 325 176
- WO-A-88/03834
- DE-A- 3 515 365
- US-A- 2 698 061

## Beschreibung

Die Erfindung betrifft eine Vorrichtung zum Filtern von heißen, staubbeladenen Gasen mit Hilfe von Filterkerzen nach dem Oberbegriff des Patentanspruches 1.

Aus der DE-C-3 515 365 ist ein Hochtemperaturfilter der gattungsgemäßen Art bekannt, bei dem die Filterkerzen hängend in einer hochtemperaturfesten Lochplatte angeordnet sind. Die Filterkerzen sind am offenen Ende mit einem radial abstehenden Bund versehen, der auf seiner Unterseite eine ballige Auflagefläche aufweist. Über diesen Bund und eine Weichdichtung werden die Filterkerzen von oben in die Lochplatte eingehängt. Die Lochplatte teilt das Filtergehäuse derart auf, daß sich der Rohgasraum unterhalb und der Reingasraum oberhalb der Lochplatte befindet. Da der Gasdruck auf der Reingasseite geringer als auf der Rohgasseite ist, entsteht eine der Gewichtskraft der Filterkerze entgegenstehende Druckdifferenz. Bei höheren Druckdifferenzen, z. B. bei Betriebsstörungen oder durch dynamische Vorgänge beim An- und Abfahren der Filteranlage besteht die Gefahr, daß die Filterkerzen vom Sitz abheben, auch wenn sie durch Gewichte beschwert sind.

Da sich aus Festigkeitsgründen die Lochplatte nicht beliebig vergrößern läßt, ist es bekannt (EP-A-0 129 053), zur Erhöhung der Leistung der Filteranlage mehrere Lochplatten in einem Gehäuse übereinander anzuordnen. In diesem Fall befindet sich über jeder Lochplatte ein Reingassammelraum, so daß die Filterkerzen von unten gegen die Lochplatte montiert werden müssen. Hierbei treten Schwierigkeiten auf, wenn im Betrieb einzelne Filterkerzen schadhaft werden und demontiert werden müssen. Die Verschraubung der Filterkerzen mit den dazugehörigen Kerzenträgern wird bereits nach wenigen Betriebsstunden schwer lösbar sein, so daß ein erheblicher Montageaufwand notwendig sein wird.

Der Erfindung liegt die Aufgabe zugrunde, die gattungsgemäße Vorrichtung zum Filtern von Gasen derart zu gestalten, daß eine einfache Montage und Demontage einzelner oder aller Filterkerzen ermöglicht und eine zuverlässige Abdichtung des Rohgasraumes gegenüber dem Reingasraum auch bei Betriebsstörungen erreicht wird.

Diese Aufgabe wird bei einer gattungsgemäßen Vorrichtung erfindungsgemäß durch die kennzeichnenden Merkmale des Patentanspruches 1 gelöst. Vorteilhafte Ausgestaltungen der Erfindung sind in den Unteransprüchen angegeben.

Durch die Erfindung ergibt sich in der einfachsten Ausführungsform eine prismatische Filterkerze in stehender Anordnung, die allein aufgrund ihres Eigengewichtes die Abdichtung zwischen dem Rohgasraum und dem Reingasraum bewirkt. Da die Druckdifferenz zwischen der Rohgasseite und der Reingasseite in der gleichen Richtung wirksam ist wie die Gewichtkraft, bleiben auch bei Druckschwankungen die Filterkerzen auf den Sitz gedrückt. Die Filterkerzen zentrieren sich im Sitz selbst. Bedingt durch ihre stehende Anordnung können die Filterkerzen bei geringer Schrägstellung erst in die obere Halterung und dann in das aufnehmende Gegenstück des Reingasraumes eingeführt werden. Dadurch wird die Montage und die in umgekehrter Folge vorzunehmende Demontage wesentlich erleichtert. Besonders vorteilhaft macht sich die stehende Anordnung von Filterkerzen bemerkbar, wenn auf der Reingasseite Sammelkanäle für die Abführung des Reingases verwendet werden. Hierdurch können die Filterkerzen gruppen- oder reihenweise angeordnet werden, so daß sie vom Gehäuseinneren her gut zugänglich sind. Dabei können die der Verbindung von Filterkerzen und Reingasseite dienenden Elemente an dem von außen zugänglichen Außenumfang der Sammelkanäle angebracht werden.

Mehrere Ausführungsbeispiele der Erfindung sind in der Zeichnung dargestellt und werden im folgenden näher erläutert. Es zeigen
- Fig. 1: schematisch einen Längsschnitt durch eine Vorrichtung zum Filtern von Gasen,
- Fig. 2: die Draufsicht auf Fig. 1 und
- Fig. 3 bis 8: verschiedene Ausführungsformen gemäß Einzelheit Z nach Fig. 1.

Die Vorrichtung zum Filtern von heißen, staubbeladenen Gasen besteht aus einem zylindrischen Gehäuse 1, das Filterkerzen 2 aufnimmt. Das Gehäuse 1 ist in seinem unteren Teil trichterförmig ausgebildet. Der Trichter 3 dient als Sammelraum für den abgeschiedenen Staub und geht in einen Auslaßstutzen 4 für den Abzug des Staubes über. Das Gehäuse 1 ist mit einem Zuführungsstutzen 5 für die Zuführung von Rohgas versehen und enthält einen Rohgasraum und einen Reingasraum. Der Rohgasraum ist durch den Innenraum 6 des Gehäuses 1 gebildet.

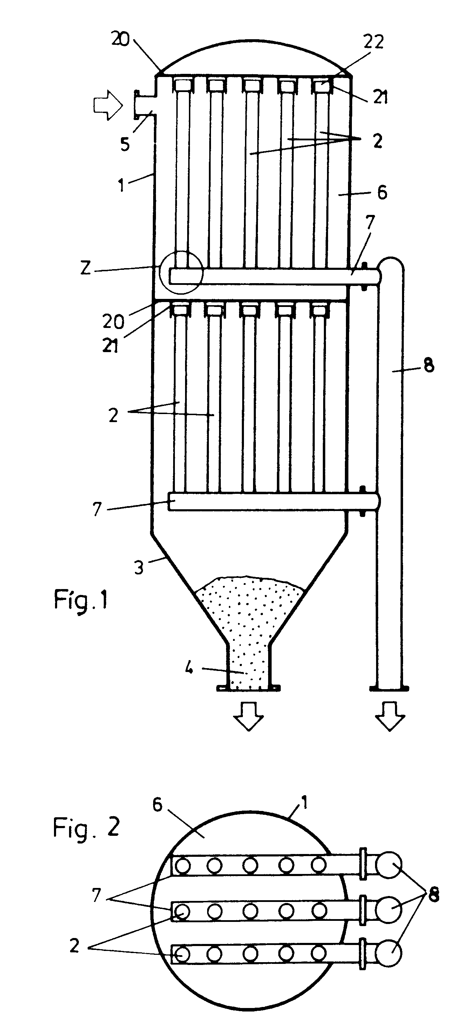

Der Reingasraum ist in dem in den Fig. 1 und 2 dargestellten Fall durch Sammelkanäle 7 gebildet, die innerhalb des Gehäuses 1 angeordnet und durch die Wand des Gehäuses 1 hindurch zu außerhalb des Gehäuses 1 liegenden Abführungsleitungen 8 geführt sind. Gemäß Fig. 1 und 2 sind mehrere Sammelkanäle 7 in einer Ebene nebeneinander und in mehreren Ebenen übereinander angeordnet.

Die Filterkerzen 2 weisen einen Hohlkörper 9 mit einer porösen Wandung auf und bestehen vorzugsweise aus einem keramischen Werkstoff. Unter Umständen können auch Metalle oder Metallverbindungen als Werkstoff zum Einsatz kommen. Der Hohlkörper 9 ist prismatisch mit einer beliebigen Außenkontur und einer vorzugsweise zylindrischen Innenwand. Das eine Ende des Hohlkörpers 9 ist durch einen Deckel 10 verschlossen, während das andere Ende zur Bildung einer Austrittsöffnung offen ist.

Die Filterkerzen 2 sind in dem Gehäuse 1 derart angeordnet, daß die Außenseite des Hohlkörpers 9 der Rohgasseite zugewandt ist, während der Innenraum des Hohlkörpers 9 mit dem Reingasraum in Verbindung steht. Die die Austrittsöffnung der Filterkerze 2 umgebende Stirnfläche 11 ist als Auflagefläche ausgebildet. Die Filterkerze 2 wird von der Öffnung 12 eines Gegenstückes des Reingasraumes in der Weise aufgenommen,daß der Deckel 10 nach oben weist und die Filterkerze 2 mit der als Auflagefläche dienenden Stirnfläche 11 auf dem Gegenstück auf Grund ihres Eigengewichtes aufruht. Der Druck des Rohgases ist um den Druckverlust, den die Filterkerzen 2 bewirken, größer als der Druck des Reingases. Diese Druckdifferenz wirkt in der gleichen Richtung wie die Kraft aus dem Eigengewicht der Filterkerzen 2 und unterstützt damit die Andrückkraft der Filterkerzen 2.

Die Öffnung 12 des Gegenstückes verengt sich nach innen und geht in eine zentrale Bohrung 13 über. Das Gegenstück kann aus einem Mundstück 14 bestehen, das auf dem Sammelkanal 7 befestigt ist. Die Sammelkanäle 7 sind auf der nach oben weisenden Fläche mit Bohrungen 15 versehen. Koaxial zu diesen Bohrungen 15 in den Sammelkanälen 7 sind die Mundstücke 14 auf dem Sammelkanal 7 angeordnet. Vorzugsweise sind der Innendurchmesser des Hohlkörpers 9, der Innendurchmesser der Bohrung 13 des Mundstückes 14 und der Durchmesser der Bohrungen 15 der Sammelkanäle 7 gleich groß.

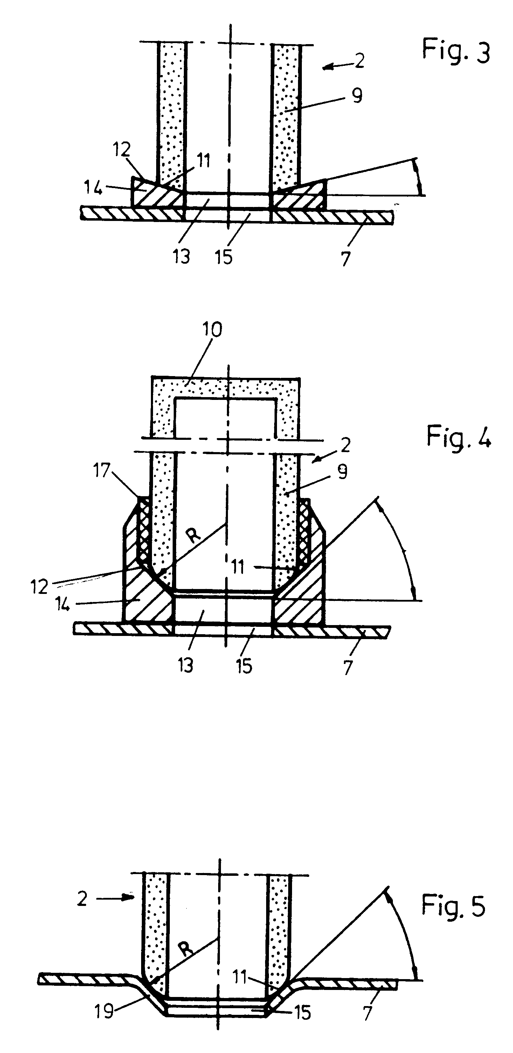

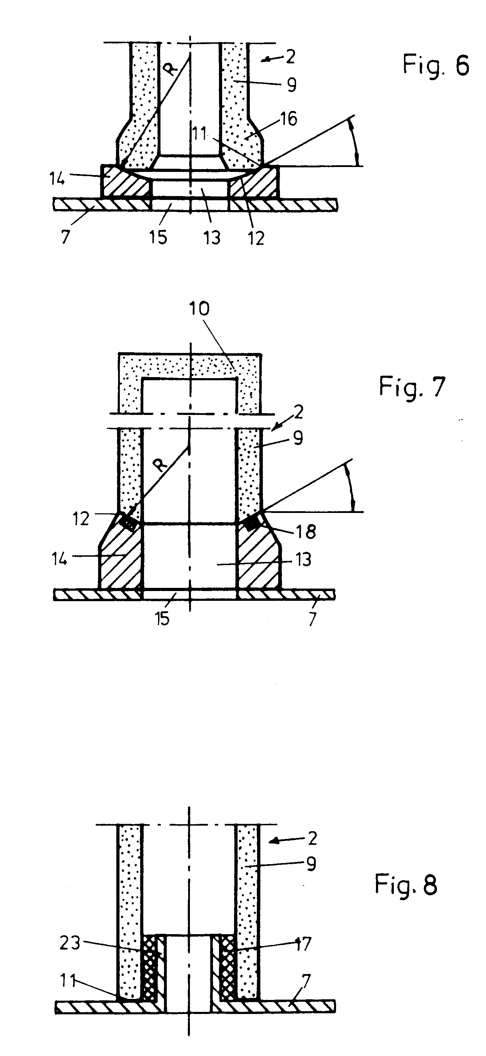

Die Stirnfläche 11 der Filterkerze 2 und die Öffnung 12 des Mundstückes 14 sind rotationssymmetrisch bearbeitet. Die Bearbeitungsmittellinie ist die gedachte Längsachse der Filterkerze 2. Dabei können die Stirnfläche 11 und die Öffnung 12 konisch ausgebildet sein und auf einer Kreiskegelfläche mit gleichem Winkel liegen (Fig. 3). Die Stirnfläche 11 kann auch ballig ausgeführt sein. Dabei kann die Öffnung 12 konisch sein (Fig. 4), oder ebenfalls auf einer Kugelfläche liegen (Fig. 6), deren Krümmungsradius R gleich dem Krümmungsradius der Stirnfläche ist. Der Krümmungsradius R der Stirnfläche 11 kann auch geringer sein als der Krümmungsradius der Öffnung 12. Wie in der Fig. 6 gezeigt ist, kann die Filterkerze 2 am unteren Ende mit einem Bund 16 versehen sein, wobei die Stirnfläche des Bundes 16 die Auflagefläche darstellt.

Der Öffnungswinkel der Öffnung 12 kann zwischen 15 und 45 Grad liegen. Als besonders günstig ist ein Winkel von 30 Grad anzusehen. Bei der Wahl des Öffnungswinkels ist zu beachten, daß sich die Filterkerze 2 selbst zentrieren muß und daß eine thermische Differenzdehnung zwischen der Filterkerze 2 und dem Mundstück 14 nicht zu Undichtigkeiten oder beim Abkühlen zu einem Zerquetschen der Filterkerze 2 führt. Gleichzeitig muß eine gewisse Schrägstellung der Filterkerzen 2 nach allen Richtungen erlaubt sein, ohne daß es zu Zerstörungen oder Undichtigkeiten kommt.

Zwischen der Stirnfläche 11 der Filterkerze 2 und der Öffnung 12 des Mundstückes 14 ergibt sich theoretisch eine kreisringförmige Berührungs- und Abdichtfläche. Diese Dichtfläche kann ohne zwischengelegte Weichdichtung gegen den Rohgasstrom in genügender Weise abdichten. Voraussetzung ist lediglich eine einwandfreie mechanische Bearbeitung der Stirnfläche 11 der Filterkerze 2 und der Öffnung 12 des Mundstückes 14. Fallweise kann das Mundstück 14 mit einem Ansatz versehen sein, der die Filterkerze mit Abstand umgibt. Der auf diese Weise entstandene Zwischenraum ist mit feuerfestem Filz 17 ausgefüllt. In der Öffnung 12 des Mundstückes 14 kann eine Aufnahmenut 18 angebracht sein, in die eine Weichdichtung z. B. aus feuerfestem Filz eingelegt ist. Zwischen die Stirnfläche 11 der Filterkerze 2 und die Öffnung 12 des Mundstückes 14 kann eine keramische Masse eingebracht werden. Diese keramische Masse verbessert die Gleiteigenschaften bei kleinen Bewegungen der Filterkerze 2 und erhöht die Dichteigenschaften zwischen dem Rohgas- und dem Reingasraum. Die keramische Masse kann aus einem aushärtbaren Kitt bestehen, der sich allenfalls mit einer der Berührungsflächen verbinden darf.

Bei der in Fig. 5 dargestellten Ausführungsform ist der jeweils eine der Bohrungen 15 der Sammelkanäle 7 umgebende Rand 19 nach innen gestülpt. Dabei dient dieser umgestülpte Rand 19 als Gegenstück.

Wie in Fig. 8 dargestellt ist, kann die Filterkerze 2 auch einen mit dem Gegenstück verbundenen Nippel 23 von außen umgreifen. Dabei ist zwischen den Nippel 23 und die Innenwand der Filterkerze 2 eine Schicht aus einem feuerfesten Filz 17 gelegt.

Wie oben dargelegt, steht die Filterkerze 2 mit der nach unten weisenden Austrittsöffnung auf dem Gegenstück auf. Oberhalb jeder stehenden Filterkerze 2 sind an einem besonderen Träger 20 Halterungen 21 angebracht. Die Halterungen 21 umgeben das obere, durch den Deckel 10 verschlossene Ende der Filterkerze 2 seitlich mit Spiel. Anstatt an einem besonderen Träger können die Halterungen 21 auch an dem oberhalb einer Reihe von Filterkerzen 2 angeordneten Sammelkanal 7 angebracht sein. Die Filterkerzen 2 können zusätzlich durch ein Gewicht 22 belastet sein.

In den Fig. 1 und 2 ist der Reingasraum des Gehäuses 1 durch einzelne Sammelkanäle 7 gebildet, die Reihen oder Gruppen von Filterkerzen 2 aufnehmen. Die Sammelkanäle 7 sind hinsichtlich ihrer Form und ihrer Neigung so gestaltet, daß der Staub, der sich an der Außenseite der Filterkerzen 2 abscheidet, nicht auf den Sammelkanälen 7 liegen bleibt, sondern nach unten in den Trichter 3 fällt. Gegebenenfalls können Förderhilfen wie Vibratoren oder Abblaseeinrichtungen vorgesehen werden.

Das Gehäuse 1 der Filtervorrichtung kann auch durch eine Lochplatte in einen Rohgasraum und einen Reingasraum aufgeteilt sein. In diesem Fall sind die Filterkerzen 2 unter Verwendung der in den Fig. 3 bis 8 dargestellten Gegenstücke koaxial zu den Löchern der Lochplatte anzuordnen.

## Patentansprüche

1. Vorrichtung zum Filtern von heißen, staubbeladenen Gasen bestehend aus Filterkerzen (2), die in einem geschlossenen, einen Rohgasraum und einen Reingasraum aufweisenden Gehäuse (1) angeordnet sind und aus einem eine Austrittsöffnung aufweisenden, im übrigen geschlossenen Hohlkörper (9) bestehen, dessen Austrittsöffnung mit dem Reingasraum verbunden ist, dadurch gekennzeichnet, daß die die Austrittsöffnung umschließende Stirnfläche (11) der Filterkerze (2) als Auflagefläche ausgebildet ist und auf einem Gegenstück des Reingasraumes aufgrund des Eigengewichtes der Filterkerze (2) in der Weise aufruht, daß die Kraft aus dem Eigengewicht der Filterkerzen (2) und eine sich zwischen dem Rohgasraum und dem Reingasraum des Gehäuses (1) einstellende Druckdifferenz in der gleichen Richtung wirken und daß die Filterkerzen (2) oberhalb der Auflagefläche seitlich mit Spiel abgestützt sind.

2. Vorrichtung nach Anspruch 1, dadurch gekennzeichnet, daß das Gegenstück als Mundstück (14) mit einer zentralen Bohrung (13) und einer sich nach oben erweiternden, rotationssymmetrischen Öffnung (12) ausgebildet ist.

3. Vorrichtung nach Anspruch 2, dadurch gekennzeichnet, daß die zentrale Bohrung (13) des Mundstückes (14) dem Innendurchmesser des Hohlraumes (9) der Filterkerze (2) entspricht.

4. Vorrichtung nach Anspruch 2 oder 3, dadurch gekennzeichnet, daß die Stirnfläche (11) der Filterkerze (2) und die Öffnung (12) des Mundstückes (14) auf einer Kugelfläche liegen.

5. Vorrichtung nach Anspruch 4, dadurch gekennzeichnet, daß die Krümmungsradien (R) von Stirnfläche (11) und Öffnung (12) gleich groß sind.

6. Vorrichtung nach Anspruch 4, dadurch gekennzeichnet, daß der Krümmungsradius (R) der Stirnfläche (11) kleiner ist als der Krümmungsradius der Öffnung (12).

7. Vorrichtung nach Anspruch 2, dadurch gekennzeichnet, daß die Öffnung (12) auf einer von der Kugelfläche abweichenden, kreiskegel- oder paraboloidförmigen Fläche liegt.

8. Vorrichtung nach einem der Ansprüche 1 bis 7, dadurch gekennzeichnet, daß der Reingasraum als ein oder mehrere Sammelkanäle (7) ausgebildet ist, die aus dem Gehäuse (1) herausgeführt und auf der nach oben weisenden Fläche mit Bohrungen (15) zur Aufnahme der Filterkerzen (2) versehen sind.

9. Vorrichtung nach einem der Ansprüche 1 bis 7, dadurch gekennzeichnet, daß der Reingasraum von dem Rohgasraum durch eine Lochplatte getrennt ist.

10. Vorrichtung nach den Ansprüchen 1, 2 und 8 oder 9, dadurch gekennzeichnet, daß die Mundstücke (14) koaxial zu den Bohrungen (15) des Sammelkanals (7) oder den Löchern der Lochplatte angeordnet sind.

11. Vorrichtung nach den Ansprüchen 1, 8 oder 9, dadurch gekennzeichnet, daß der jeweils eine Bohrung (15) des Sammelkanals (7) oder ein Loch der Lochplatte umschließende Rand (19) nach innen gestülpt ist und als Gegenstück dient.

12. Vorrichtung nach einem der Ansprüche 1 bis 11, dadurch gekennzeichnet, daß in der Öffnung (12) des Gegenstückes eine umlaufende Nut (18) angebracht ist, in die eine Dichtung eingelegt ist.

13. Vorrichtung nach einem der Ansprüche 1 bis 11, dadurch gekennzeichnet, daß zwischen der Stirnfläche (11) der Filterkerze (2) und der Öffnung (12) des Gegenstückes eine Schicht aus einer keramischen, aushärtenden Masse vorgesehen ist.

14. Vorrichtung nach einem der Ansprüche 1 bis 13, dadurch gekennzeichnet, daß der Öffnungswinkel der Öffnung (12) des Gegenstückes 15 bis 45, vorzugsweise 30 Grad beträgt.

## Claims

1. Device, for the filtering of hot dust-laden gases, consisting of filter cartridges (2), which are arranged in a closed housing (1) displaying a raw gas chamber and a clean gas chamber and which consist of a hollow body (9), which displays an exit opening and is otherwise closed and the exit opening of which is connected with the clean gas chamber, characterised thereby, that that end face (11) of the filter cartridge (2), which surrounds the exit opening, is constructed as bearing surface and rests on a countermember of the clean gas chamber by reason of the own weight of the filter cartridge (2) in such a manner that the forces due to the own weight of the filter cartridges (2) and to a pressure difference setting in between the raw gas chamber and the clean gas chamber of the housing (1) act in the same direction and that the filter cartridges (2) are supported laterally with play above the bearing surface.

2. Device according to claim 1, characterised thereby, that the countermember is constructed as mouthpiece (14) with a central bore (13) and an upwardly enlarging, rotationally symmetrical opening (12).

3. Device according to claim 2, characterised thereby that the central bore (13) of the mouthpiece (14) corresponds with the internal diameter of the hollow space (9) of the filter cartridge (2).

4. Device according to claim 2 or 3, characterised thereby, that the end face (11) of the filter cartridge (2) and the opening (12) of the mouthpiece (14) lie on a spherical surface.

5. Device according to claim 4, characterised thereby, that the radii (R) of curvature of the end face (11) and the opening (12) are equally large.

6. Device according to claim 4, characterised thereby, that the radius (R) of curvature of the end face (11) is smaller than the radius of curvature of the opening (12).

7. Device according to claim 2, characterised thereby, that the opening (12) lies on a circularly conical or paraboloid surface deviating from the spherical surface.

8. Device according to one of the claims 1 to 7, characterised thereby, that the clean gas chamber is constructed as one or more collecting channels (7), which are led out of the housing (1) and provided on the upwardly facing surface with bores (15) for the reception of the filter cartridges (2).

9. Device according to one of the claims 1 to 7, characterised thereby, that the clean gas chamber is separated from the raw gas chamber by a perforated plate.

10. Device according to the claims 1, 2 and 8 or 9, characterised thereby, that the mouthpieces (14) are arranged co-axially with the bores (15) of the collecting channel (7) or the holes of the perforated plate.

11. Device according to the claims 1, 8 or 9, characterised thereby, that the rim (19), which respectively surrounds a bore (15) of the collecting channel (7) or a hole of the perforated plate, is bent over inwardly and serves as countermember.

12. Device according to one of the claims 1 to 11, characterised thereby, that an encircling groove (18), into which a seal is laid, is made in the opening (12) of the countermember.

13. Device according to one of the claims 1 to 11, characterised thereby, that a layer of a ceramic hardening mass is provided between the end face (11) of the filter cartridge (2) and the opening (12) of the countermember.

14. Device according to one of the claims 1 to 13, characterised thereby, that the aperture angle of the opening (12) of the countermember amounts to 15 to 45, preferably 30 degrees.

## Revendications

1. Dispositif de filtration de gaz poussiéreux à haute température composé de bougies filtrantes (2) disposées dans une enceinte à gaz bruts fermée et dans un carter (1) présentant une enceinte à gaz épurés et un corps creux (9) pourvu d'une ouverture de sortie reliée à l'enceinte à gaz épurés, caractérisé en ce que la face frontale (11), entourant l'ouverture de sortie de la bougie filtrante (2) est utilisée comme surface de contact et repose sur une contre-pièce de l'enceinte à gaz épurés, du fait du poids propre de la bougie filtrante (2), de manière que la force composée du poids propre de celle-ci et de la différence de pression s'établissant entre l'enceinte à gaz bruts et l'enceinte à gaz épurés du carter (1) agisse dans le même sens, et en ce que les bougies filtrantes (2) sont maintenues au-dessus de la surface de contact avec un jeu latéral.

2. Dispositif selon la revendication 1, caractérisé en ce que la contre-pièce est réalisée sous forme d'une pièce d'embouchure (14) avec un perçage central (13) et une ouverture (12) répondant à une symétrie de rotation et allant en s'élargissant vers le haut.

3. Dispositif selon la revendication 2, caractérisé en ce que le perçage central (13) de la pièce d'embouchure (4) correspond au diamètre intérieur de l'espace creux (9) de la bougie filtrante (2).

4. Dispositif selon la revendication 2 ou 3, caractérisé en ce que la surface frontale (11) de la bougie filtrante (2) et l'ouverture (12) de la pièce d'embouchure (14) sont situées sur une surface sphérique.

5. Dispositif selon la revendication 4, caractérisé en ce que les rayons de courbures (R) de la face frontale (11) et de l'ouverture (12) sont égaux.

6. Dispositif selon la revendication 4, caractérisé en ce que le rayon de courbure (R) de la face frontale (11) est inférieur à celui de l'ouverture (12).

7. Dispositif selon la revendication 2, caractérisé en ce que l'ouverture (12) est située sur une surface différant de la surface sphérique, en forme de cône circulaire ou de paraboloïde.

8. Dispositif selon l'une des revendications 1 à 7, caractérisé en ce que l'enceinte à gaz épurés est réalisée sous forme d'un ou plusieurs canaux collecteurs (7), sortis du carter (1) et pourvus, sur la face tournée vers le haut, de perçages (15) destinés à recevoir les bougies filtrantes (2).

9. Dispositif selon l'une des revendications 1 à 7, caractérisé en ce que l'enceinte à gaz épurés est séparée de l'enceinte à gaz bruts au moyen d'une plaque perforée.

10. Dispositif selon les revendications 1,2 et 8 ou 9, caractérisé en ce que les pièces d'embouchure (14) sont disposées coaxialement par rapport aux perçages (15) du canal collecteur (7) ou aux trous de la plaque perforée.

11. Dispositif selon les revendications 1, 8 ou 9, caractérisé en ce que le bord (19), entourant chaque perçage (15) du canal collecteur (7) ou un trou de la plaque perforée, est replié vers l'intérieur et sert de contre-pièce.

12. Dispositif selon l'une des revendications 1 à 11, caractérisé en ce qu'une gorge circulaire (18), dans laquelle est insérée un joint d'étanchéité, est ménagée dans l'ouverture (12) de la contre-pièce.

13. Dispositif selon l'une des revendications 1 à 11, caractérisé en ce qu'entre la face frontale (11) de la bougie filtrante (2) et l'ouverture (12) de la contre-pièce est prévue une couche en masse céramique durcissante.

14. Dispositif selon l'une des revendications 1 à 13, caractérisé en ce que l'angle d'ouverture de l'ouverture (12) de la contre-pièce est de 15 à 45 degrés et de préférence de 30 degrés.
